(19) Europäisches Patentamt
European Patent Office
Office européen des brevets

(11) **EP 2 140 285 B1**

(12) **FASCICULE DE BREVET EUROPEEN**

(45) Date de publication et mention
de la délivrance du brevet:
**13.07.2011 Bulletin 2011/28**

(21) Numéro de dépôt: **08735573.1**

(22) Date de dépôt: **28.03.2008**

(51) Int Cl.:
*G01S 5/14* (2006.01)     *G01S 1/00* (2006.01)

(86) Numéro de dépôt international:
**PCT/EP2008/053745**

(87) Numéro de publication internationale:
**WO 2008/125458 (23.10.2008 Gazette 2008/43)**

(54) **PROCÉDÉ DE TRAITEMENT DE SIGNAUX DE RADIONAVIGATION**

VERFAHREN ZUM VERARBEITEN VON FUNKNAVIGATIONSSIGNALEN

METHOD OF PROCESSING RADIONAVIGATION SIGNALS

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **29.03.2007 FR 0754139**

(43) Date de publication de la demande:
**06.01.2010 Bulletin 2010/01**

(73) Titulaire: **Centre National d'Etudes Spatiales
75039 Paris Cedex 01 (FR)**

(72) Inventeurs:
  • **LAURICHESSE, Denis
    31170 Tournefeuille (FR)**
  • **MERCIER, Flavien
    31320 Auzeville (FR)**

(74) Mandataire: **Office Freylinger
P.O. Box 48
8001 Strassen (LU)**

(56) Documents cités:
**US-A- 5 148 179**

  • **MICHAEL J. GABOR, R. STEVEN NEREM: "GPS
Carrier Phase Ambiguity Resolution Using
Satellite-Satellite Single Differences" ION GPS
99, 17 septembre 1999 (1999-09-17), pages
1569-1578, XP002460088 Nashville**
  • **MICHAEL J. GABOR, R. STEVEN NEREM:
"Characteristics of Satellite-Satellite Single
Difference Widelane Fractional Carrier Phase
Biases" ION GPS 2000, 22 septembre 2000
(2000-09-22), pages 396-406, XP002460089 Salt
Lake City**
  • **JINGRONG CHENG ET AL: "Aided integer
ambiguity resolution algorithm" POSITION
LOCATION AND NAVIGATION SYMPOSIUM,
2004. PLANS 2004 MONTEREY, CA, USA 26-29
APRIL 2004, PISCATAWAY, NJ, USA,IEEE, US, 26
avril 2004 (2004-04-26), pages 740-745,
XP010768705 ISBN: 0-7803-8416-4**
  • **BLOMENHOFER H ET AL: "Development of a
real-time DGPS system in the centimeter range"
POSITION LOCATION AND NAVIGATION
SYMPOSIUM, 1994., IEEE LAS VEGAS, NV, USA
11-15 APRIL 1994, NEW YORK, NY, USA,IEEE, 11
avril 1994 (1994-04-11), pages 532-539,
XP010117775 ISBN: 0-7803-1435-2**

## Description

### Domaine technique

La présente invention concerne le domaine des systèmes de radionavigation ou de positionnement par satellite, en particulier un procédé de traitement des signaux de radionavigation émis par des satellites d'un tel système.

### Etat de la technique

Les systèmes de positionnement par satellite comme GPS (Global Positioning System), Galileo, GLONASS, QZSS, Compass, IRNSS et autres utilisent des signaux de radionavigation modulés appelés « en spectre étalé ». Ces signaux véhiculent essentiellement des codes pseudo-aléatoires formés de séquences numériques se répétant périodiquement, dont la fonction principale est de permettre un Accès Multiple à Répartition de Code (AMRC) et la fourniture d'une mesure du temps de propagation du signal émis par le satellite. Accessoirement, les signaux de radionavigation peuvent aussi transporter une charge utile.

Les signaux de radionavigation sont formés par modulation des fréquences centrales (porteuses). Dans le cas de GPS, les signaux de radionavigation sont transmis dans les bandes de fréquences L1, centrée sur 1575,42 MHz et L2, centrée sur 1227,6 MHz. Au cours de la modernisation de GPS, la bande L5, centrée sur 1176,45 MHz sera ajoutée. Les satellites de la constellation Galileo transmettront dans la bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz).

Les mesures élémentaires que peut effectuer un récepteur comprennent les mesures de code et les mesures de phase de porteuse. Ces mesures élémentaires peuvent évidemment être combinées entre elles. Les mesures de code sont d'une précision métrique tandis que les mesure de phase sont d'une précision de quelques mm. Or les mesures de phase présentent le désavantage qu'elles ne livrent que la partie réelle de la différence de phase de la porteuse entre l'émission par le satellite et le récepteur. Les mesures de phase sont donc ambiguës dans le sens que le nombre de cycles entiers entre le satellite et le récepteur sont inconnus au départ. Afin de pouvoir bénéficier de la précision des mesures de phase, un récepteur doit résoudre les ambiguïtés dont elles sont entachées.

La résolution des ambiguïtés de phase est couramment effectuée par différentiation des mesures de phase (simple ou double différentiation). Un procédé utilisant des différences simples entre satellites est décrit, par exemple, dans l'article « GPS carrier phase ambiguity resolution using satellite-satellite single differences » par M. J. Gabor et R. S. Nerem, ION GPS '99, 14-17 septembre 1999, Nashville, TN. La différentiation permet d'éliminer des causes d'erreur (non modélisées) communes à plusieurs mesures, et permet ainsi de faire apparaître une information entière, dont la prise en compte améliore encore les performances. Cependant, cette information entière consiste en des différences d'une ou plusieurs ambiguïtés de phase élémentaires et ne permet pas, en général, de remonter aux ambiguïtés de phase élémentaires.

### Objet de l'invention

La présente invention a pour objet de proposer une méthode permettant de résoudre l'ambiguïté de phase de mesures non différentiées faites par un récepteur (au sol ou en orbite), à partir des mesures brutes de code et de phase. L'invention permet à un récepteur de trouver la ou les valeurs de phase non ambiguës de façon autonome, c'est à dire sans nécessairement utiliser une ou plusieurs différentiations de mesures sur un réseau local ou mondial.

### Description générale de l'invention

De manière générale, l'invention comprend deux volets. D'une part, elle comprend un procédé se déroulant au niveau d'un réseau de stations de référence lors duquel sont déterminées des informations supplémentaires à l'aide desquelles un récepteur d'utilisateur ne faisant pas partie du réseau peut résoudre les ambiguïtés de phase. D'autre part, l'invention comprend le procédé se déroulant au niveau du récepteur ne faisant pas partie du réseau qui utilise les informations supplémentaires élaborées par le réseau de stations de référence et mises à disposition par une voie de communication quelconque.

Un premier aspect de l'invention concerne la détermination, au niveau d'un réseau de stations (récepteurs de référence), comprenant au moins une station, d'un délai de satellite correspondant à un décalage d'horloge et/ou un biais interfréquence et/ou un écart de centres de phase des fréquences respectives non compensé(s), sur le satellite, entre le code et la phase d'un signal de radionavigation. On présuppose dans toute la suite une constellation de satellites de radionavigation dont les satellites émettent chacun au moins deux signaux de radionavigation dans deux bandes de fréquence distinctes. Chaque satellite diffuse donc au moins un premier signal de radionavigation sur une première fréquence et un second signal de radionavigation sur une seconde fréquence distincte de la première. Chaque station à partir de laquelle un satellite est visible (c'est-à-dire au-dessus de l'horizon) peut effectuer des mesures de code et de phase pour chacun des deux signaux provenant du satellite en question et en déduire une valeur brute de l'ambiguïté widelane. On détermine alors, au niveau du réseau de référence, sur base de cette valeur brute de l'ambiguïté widelane, un délai interne du satellite et une valeur entière de l'ambiguïté widelane. On notera que les mesures de code et de phase dont il est question ici sont des mesures non-différentiées (c.-à-d. différentiées ni entre stations ni entre satellites). On remarque ici que les délais internes de satellites influencent les mesures de plusieurs récepteurs de la même façon et disparaissent donc par différentiation de mesures entre deux récepteurs. Les méthodes fonctionnant par différentiation de mesures ne nécessitent donc pas la connaissance du ou des délais internes de satellites. Par contraste, le procédé selon l'invention, utilisant les mesures non-différentiées, propose justement de déterminer le délai interne de satellite.

Ce procédé comprend, notamment, les étapes suivantes :

-    recevoir les premier et second signaux de radionavigation au niveau du récepteur de référence ;

-    effectuer, à l'aide du récepteur de référence et pour chacun des premier et second signaux reçus, une mesure non-différentiée de code et une mesure non-différentiée de phase ;

-    calculer la valeur brute de l'ambiguïté de phase widelane à partir des mesures de code (non différentiées) et des mesures de phase (non différentiées); et

-    fixer le délai interne de satellite ainsi que la valeur entière de l'ambiguïté de phase widelane sur base de la valeur brute pour le récepteur de référence.

De préférence, on détermine le délai interne de satellite ainsi que la valeur entière de l'ambiguïté de phase widelane pour chaque combinaison satellite/station disponible (pour une date donnée, les satellites ne sont pas tous visibles depuis chaque station), à partir de mesures de code et de phase effectuées pour chacun des premier et second signaux provenant du satellite respectif à l'aide du récepteur de référence respectif. Ceci est fait de façon cohérente au niveau du réseau de référence de sorte que l'on obtient un jeu de délais de satellite et de délais de station cohérents entre eux.

Un deuxième aspect de l'invention concerne la détermination d'horloges précises de satellite au niveau du réseau de référence. Dans ce procédé, on reçoit les premier et second signaux de radionavigation au niveau des stations, on effectue, pour chacun des premier et second signaux reçus, une mesure non-différentiée de code et une mesure non-différentiée de phase et on détermine une valeur d'horloge de satellite à partir des mesures non-différentiées de code, des mesures non-différentiées de phase, d'une ou de plusieurs valeurs entières de l'ambiguïté widelane ainsi que d'une modélisation de la distance de propagation entre le satellite et le ou les récepteurs de référence. Pour déterminer les valeurs entières de l'ambiguïté widelane, on se procure les délais internes des satellites ou on les calcule comme indiqué plus haut, et ensuite on déduit des mesures brutes de l'ambiguïté widelane les valeurs entières à l'aide des délais internes des satellites. La modélisation de la distance de propagation peut faire intervenir, notamment, l'orbite précise du satellite, l'allongement troposphérique, la position de la station tenant compte des marées etc. Des orbites précises peuvent être données en entrée si de telles orbites sont disponibles. Alternativement, les orbites précises peuvent être estimées au cours du filtrage.

Les valeurs des horloges des satellites et, le cas échéant, les orbites précises des satellites d'une constellation sont estimées de préférence par filtrage à partir d'un ensemble de mesures de code et de phase sur un ensemble de stations (typiquement 50 stations). Les paramètres de modélisation ajustés pendant un tel filtrage sont les horloges émetteurs et récepteurs à chaque pas de temps, un biais troposphérique lentement variable sur la journée par station, et les ambiguïtés narrowlane (un paramètre identifié par passage). La détermination d'une valeur d'horloge comprend préférentiellement l'estimation de paramètres de la modélisation de la distance de propagation (comme p.ex. l'orbite précise du satellite concerné) à l'aide des mesures non-différentiées de code, des mesures non-différentiées de phase et d'une ou de plusieurs valeurs entières de l'ambiguïté widelane et ensuite l'estimation de la valeur d'horloge à partir des paramètres estimés.

Selon un exemple simple d'algorithme de filtrage, exposé plus en détail dans la suite, on résout d'abord l'ensemble du problème avec des ambiguïtés flottantes, de façon à identifier avec une précision suffisante les paramètres de modélisation tels que l'allongement troposphérique et/ou une orbite précise, etc. Ensuite, l'ambiguïté narrowlane s'exprime en fonction des mesures de phase, de la modélisation identifiée et des horloges de satellite et des horloges de récepteur.

On appréciera que le fait d'avoir identifié au préalable l'ambiguïté widelane lors de la détermination des délais de satellite entraîne que le problème à résoudre lors de la détermination des horloges de satellites ne comprend qu'une seule ambiguïté par passage, au lieu de deux comme dans les approches conventionnelles. La précision de modélisation nécessaire pour faire apparaître les valeurs entières est bien moindre que dans le cas où aucune ambiguïté ne serait connue au préalable. En particulier, il n'y a plus besoin de modèle de l'allongement ionosphérique car il peut être éliminé par combinaison des mesures bi-fréquence. Le fait que l'allongement ionosphérique n'entre pas dans la modélisation, réduit le nombre de paramètres à estimer par rapport aux méthodes conventionnelles, ce qui constitue un avantage considérable du procédé selon cet aspect de l'invention.

Les délais de satellite ainsi que les horloges et éventuellement aussi les orbites précises de satellites peuvent être diffusés (de manière cryptée ou en clair) aux récepteurs d'utilisateurs par tout moyen convenable, p.ex. diffusion terrestre, diffusion par satellite (p.ex. à partir de satellites de type SBAS ou des satellites de radionavigation eux-mêmes si le système dispose d'un signal contenant des données), par une voie de téléphonie mobile (p.ex. à partir d'un relais téléphonique), via l'internet, par des pseudolites, par WIFI, par bluetooth, etc. On notera que les délais de satellite restent essentiellement constants dans le temps. On peut donc les stocker dans une base de données à l'intérieur du récepteur qui se les procure à partir de cette base de données en cas de besoin. Les orbites précises et les horloges de satellite, par contre, sont des données qui varient à chaque pas de temps et qui sont donc de préférence diffusées en temps réel.

L'invention concerne, en outre, le procédé qui se déroule au niveau d'un récepteur quelconque (p.ex. un récepteur d'utilisateur final ou un récepteur de station de réseau). Le récepteur reçoit les premier et second signaux de radionavigation et effectue, pour chacun des premier et second signaux reçus, une mesure non-différentiée de code et une mesure non-différentiée de phase. Il calcule ensuite une valeur brute de l'ambiguïté de phase widelane à partir des mesures non-différentiées de code et des mesures non-différentiées de phase et se procure un délai interne de satellite concernant le satellite en question. A partir de la valeur brute et le délai interne de satellite, il détermine ensuite une valeur entière de l'ambiguïté widelane.

Selon un mode d'exécution préféré du procédé se déroulant au niveau du récepteur, ce dernier se procure une valeur d'orbite précise et une valeur d'horloge de satellite concernant le satellite et estime par filtrage, à partir des mesures non-différentiées de code, des mesures non-différentiées de phase de la valeur entière de l'ambiguïté widelane, de la valeur d'orbite, de la valeur d'horloge de satellite ainsi que d'une modélisation de la distance de propagation entre le satellite et le récepteur, une valeur entière d'une ambiguïté narrowlane.

On note que le délai interne de satellite peut être procuré à partir d'une base de données interne ou externe au récepteur ou à partir d'un message (encrypté ou non encrypté) diffusé par un satellite SBAS ou envoyé par un réseau de radiotéléphonie ou diffusé par diffusion terrestre ou par tout autre moyen de communication convenable, p. ex. les moyens mentionnés plus haut. Les orbites précises de satellite et les horloges de satellite sont de préférence extraites d'un message diffusé par un satellite SBAS ou envoyé par un réseau de radiotéléphonie ou diffusé par diffusion terrestre ou par tout autre moyen de communication convenable.

**Brève description des dessins**

D'autres particularités et caractéristiques de l'invention ressortiront de la description détaillée d'une réalisation avantageuse présentée ci-dessous, à titre d'illustration, avec référence aux dessins annexés. Ceux-ci montrent:

Fig. 1: des valeurs brutes de l'ambiguïté widelane calculées sur base de mesures de code et de phase ;

Fig. 2: les résidus que l'on obtient après correction des valeurs brutes de l'ambiguïté widelane avec les délais internes de satellite ;

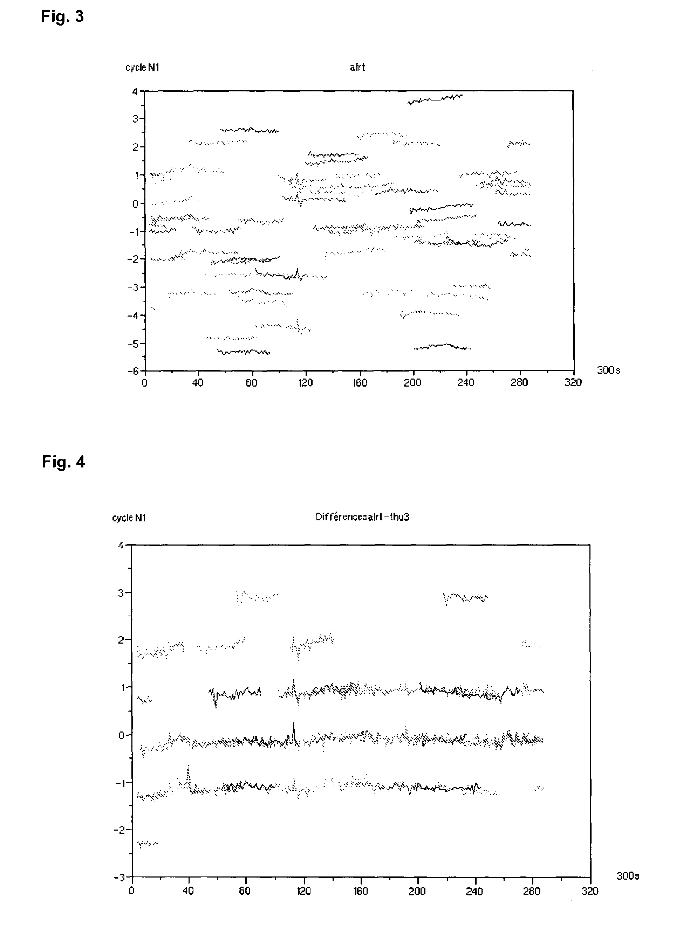

Fig. 3: des résidus de l'ambiguïté narrowlane obtenus par filtrage conventionnel ;

Fig. 4: des résidus de l'ambiguïté narrowlane obtenus par filtrage et résolution des ambiguïtés sur le réseau.

**Description d'une exécution préférée**

Pour chaque satellite visible depuis le récepteur, on a au niveau de ce dernier deux mesures non-différentiées de code (non ambiguës), notées ci-après $P_1$ et $P_2$, et deux mesures non-différentiées de phase (ambiguës), notées $L_1$ et $L_2$, pour les fréquences $f_1$ et $f_2$, respectivement.

Dans la suite, on utilisera les notations suivantes :

$$\gamma = \frac{f_1^{\cdot 2}}{f_2^2}, \quad \lambda_1 = \frac{c}{f_1}, \quad \lambda_2 = \frac{c}{f_2}$$

où c représente la vitesse de la lumière. Pour les bandes L1 et L2 du système GPS, on a, par exemple : $f_1 = 154\ f_0$ et $f_2 = 120\ f_0$, où $f_0 = 10{,}23$ MHz. On utilisera aussi la convention selon laquelle les mesures de code $P_1$, $P_2$ sont exprimées en unités de longueur, tandis que les mesures de phase $L_1$, $L_2$ sont exprimées en cycles.

Les mesures non-différentiées de code et de phase remplissent les équations suivantes :

$$P_1 = D + (\Delta c + \Delta \tau) + e + \Delta h$$
$$P_2 = D + \gamma(\Delta c + \Delta \tau) + \gamma e + \Delta h$$
$$\lambda_1 L_1 = D + (\Delta c + \Delta \tau) - e + \Delta h + \Delta b - \lambda_1 N_1$$
$$\lambda_2 L_2 = D + \gamma(\Delta c + \Delta \tau) - \gamma e + \Delta h + \Delta b - \lambda_2 N_2$$

où

-    D représente une grandeur comprenant la distance de propagation géométrique, les effets de la troposphère, les effets de différence de centre de phase, les effets de rotation géométrique de phase (phase wind-up), les effets relativistes, etc. ;

-    e contient le terme d'allongement ionosphérique qui varie en fonction du carré de la fréquence et qui est éliminé par la combinaison iono-free des observables de phase et de code;

-    $\Delta \tau = \tau_{rec} - \tau_{eme}$ contient le différentiel des biais inter-fréquence (TGD) entre l'émetteur et le récepteur ;

-    $\Delta C = C_{rec} - C_{eme}$ contient le différentiel des écarts de centres de phase des fréquences respectives/centre de phase iono-free entre l'émetteur et le récepteur ;

-    $\Delta h = h_{rec} - h_{eme}$ représente la différence entre l'horloge du récepteur $h_{rec}$ et celle de l'émetteur $h_{eme}$ ;

-    $\Delta b = b_{rec} - b_{eme}$ représente la différence de biais de récepteur $b_{rec}$ et d'émetteur $b_{eme}$ (les biais $b_{rec}$ et $b_{eme}$ correspondent à des différences d'horloge entre le code et la phase); et où

-    $N_1$, $N_2$ représentent les ambiguïtés de phase (entières) des deux porteuses.

Les différences de phase (non ambiguës) entre l'émission des signaux par le satellite et la réception par le récepteur s'écrivent $L_1+N_1$ et $L_2+N_2$, où $N_1$ et $N_2$ représentent les ambiguïtés (entières) recherchées. On pose $N_w=N_2-N_1$, $N_w$ étant appelée ambiguïté widelane (entière).

On calcule l'allongement ionosphérique de code par :

$$eP = \frac{P_1 - P_2}{1 - \gamma}.$$

On pose :

$$\widetilde{N}_1 = \frac{P_1 - 2eP}{\lambda_1} - L_1 \ \text{ et } \ \widetilde{N}_2 = \frac{P_2 - 2\gamma eP}{\lambda_2} - L_2 .$$

Ces quantités ne dépendent que des mesures.

Or, les bruits de mesure de code sont tels que, à l'échelle d'un passage (temps de visibilité d'un satellite), $\widetilde{N}_1$ et $\widetilde{N}_2$ sont dispersées de l'ordre de la dizaine de cycles. Même en effectuant une moyenne par passage, on ne peut obtenir une estimation correcte de $N_1$ et $N_2$. C'est la raison pour laquelle on utilise les mesures de code pour déterminer l'ambiguïté widelane.

En développant les équations pour $\widetilde{N}_1$ et $\widetilde{N}_2$, on obtient :

$$\widetilde{N}_1 = N_1 - \frac{2(\Delta c + \Delta \tau)}{\lambda_1} - \frac{\Delta b}{\lambda_1} \ \text{ et } \ \widetilde{N}_2 = N_2 - \frac{2\gamma(\Delta c + \Delta \tau)}{\lambda_2} - \frac{\Delta b}{\lambda_2} .$$

On obtient la valeur brute $\widetilde{N}_w$ de l'ambiguïté widelane par :

$$\widetilde{N}_{w} = \widetilde{N}_2 - \widetilde{N}_1 = N_{w} - 2\left(\frac{\gamma}{\lambda_2} - \frac{1}{\lambda_1}\right)(\Delta c + \Delta \tau) + \left(\frac{1}{\lambda_1} - \frac{1}{\lambda_2}\right)\Delta b = N_{w} - 2\frac{\lambda_2}{\lambda_1 \lambda_{w}}(\Delta c + \Delta \tau) + \frac{\Delta b}{\lambda_{w}}$$

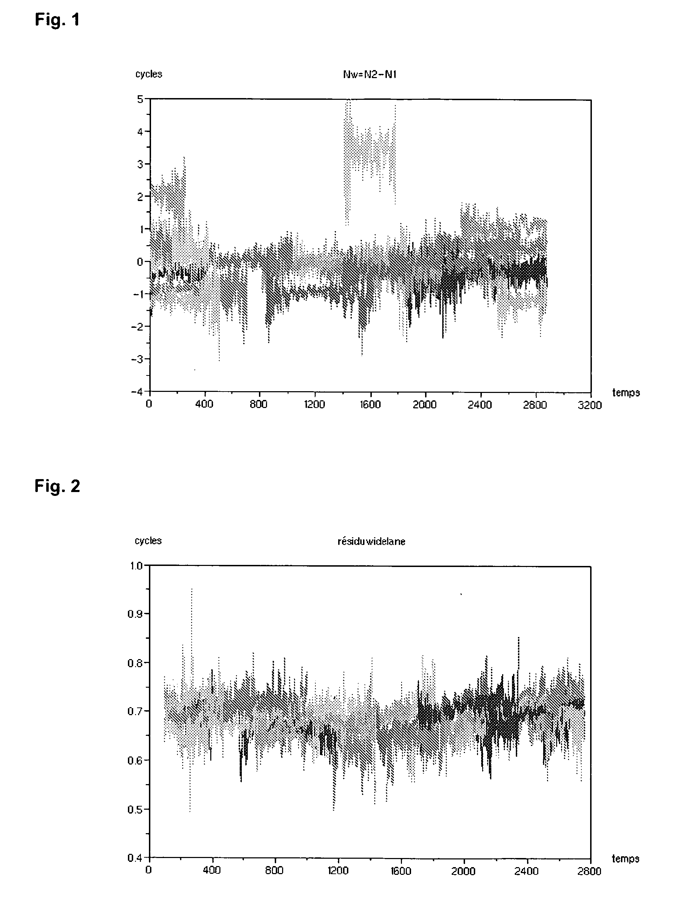

où $\lambda_w$ est défini par $1/\lambda_w = 1/\lambda_1 - 1/\lambda 2$ et correspond à la longueur d'onde de la widelane (environ 87 cm dans le cas des bandes L1 et L2). La fig. 1 montre un exemple de courbes de valeurs brutes d'ambiguïtés widelane issues de mesures de code et de phase (non différentiées) d'un récepteur. On trouve pour $N_w$ une expression de la forme :

$$\left\langle \widetilde{N}_{w} \right\rangle = N_{w} + \mu_{rec}^{w(t)} - \mu_{eme}^{w(t)} .$$

On note qu'à l'échelle d'un passage, $\widetilde{N}_w$ présente un bruit suffisamment faible (en dessous de la fraction de cycle) pour effectuer une estimation correcte de $N_w$.

Détermination de délais internes de satellite au niveau d'un réseau de référence

Au niveau d'un réseau de référence comprenant au moins une station (un récepteur de référence), on détermine des valeurs brutes $\widetilde{N}_w$ de l'ambiguïté à partir des mesures non-différentiées de phase et de code. Les valeurs brutes $\widetilde{N}_w$, sont évaluées à l'aide d'un estimateur sur un passage ou sur une partie de passage pour réduire le bruit, ce qui fournit une valeur brute estimée, notée $\langle \widetilde{N}_w \rangle$. L'estimateur peut être, p.ex. une moyenne, une médiane ou un estimateur robuste avec rejet éventuel de mesures aberrantes. On pose que cette valeur $\langle \widetilde{N}_w \rangle$ peut se décomposer en une valeur entière et deux valeurs additionnelles lentement variables indépendantes de la mesure et spécifiques de délais internes au satellite et au récepteur :

$$\left\langle \widetilde{N}_{w} \right\rangle = N_{w} + \mu_{rec}^{w(t)} - \mu_{eme}^{w(t)} .$$

En l'absence d'hypothèses supplémentaires, ce problème mixte entiers-réels est singulier, car dans toutes les équations interviennent les différences $\mu_{rec}^{w(t)} - \mu_{eme}^{w(t)}$ ce qui fait que les $\mu_{eme}^{w(t)}$ et $\mu_{rec}^{w(t)}$ ne sont définis qu'à une constante réelle près. D'autre part, $N_w$ étant entier par passage, il y a aussi des singularités globales entières au niveau des $\mu_{eme}^{w(t)}$ et des $\mu_{rec}^{w(t)}$.

On commence le processus de calcul par choisir une première station du réseau, de préférence une dont on sait que les $\mu_{rec}^{w(t)}$ sont stables dans le temps. Pour cette station, on fixe la valeur de $\mu_{rec}^{w(t)}$ de façon arbitraire, p.ex. en posant $\mu_{rec}^{w(t)} = 0$. On parcourt alors les passages des satellites en visibilité de cette station. Pour chaque passage, on a $\langle \widetilde{N}_w \rangle = N_w - \mu_{eme}^{w(t)}$, par définition de la première station (avec $\mu_{rec}^{w(t)} = 0$). On décompose alors $\langle \widetilde{N}_w \rangle$ en une quantité entière arbitraire (p.ex. l'entier le plus proche), notée $N_w$, et une quantité pas nécessairement entière correspondant à la différence $N_w$ - $\langle \widetilde{N}_w \rangle$, que l'on note $\mu_{eme}^{w(t)}$. Cela fournit les $\mu_{eme}^{w(t)}$ des satellites en visibilité de la première station.

Pour l'ensemble des satellites dont on connaît maintenant les délais internes $\mu_{eme}^{w(t)}$, on estime les délais $\mu_{rec}^{w(t)}$ des autres stations. Cette fois-ci, dans l'équation $\langle \widetilde{N}_w \rangle = N_w + \mu_{rec}^{w(t)} - \mu_{eme}^{w(t)}$, la valeur de $\mu_{eme}^{w(t)}$ est connue. On décompose alors $\langle \widetilde{N}_w \rangle + \mu_{eme}^{w(t)}$ en un nombre entier arbitraire $N_w$ (de la nouvelle station) et le délai de station $\mu_{rec}^{w(t)}$ correspondant. On répète ces étapes pour tous les satellites de la constellation et toutes les stations du réseau de référence. On obtient finalement des valeurs $\mu_{eme}$ cohérentes sur tout le réseau de référence. Les valeurs $\mu_{eme}$ peuvent être considérées comme constantes sur au moins une journée.

Détermination de d'horloges de satellite au niveau d'un réseau de référence

Après avoir déterminé l'ambiguïté widelane, au moins une ambiguïté ($N_1$ ou $N_2$) reste inconnue.

Du fait que l'ambiguïté widelane est connue, la résolution le l'ambiguïté de phase $N_1$ ou $N_2$ (ambiguïté narrowlane) est facilitée de façon significative, en particulier en ce qui concerne les précisions de modélisation nécessaires.

Les mesures de code $P_1$ et $P_2$ dépendent de plusieurs paramètres dont la distance géométrique entre les points d'émission et de réception, les effets ionosphériques, les effets troposphériques ainsi que les horloges d'émetteur et de récepteur. Pour identifier les ambiguïtés restantes, il faut disposer d'une modélisation suffisamment précise de ces grandeurs, ce qui va nécessiter une résolution globale sur le réseau de récepteurs à traiter, à cause des horloges.

On pose :

$$P_c = \frac{\gamma P_1 - P_2}{\gamma - 1} \text{ (code iono-free)}$$

$$Q_c = \frac{\gamma \lambda_1 \left(L_1 + \hat{N}_1\right) - \lambda_2 \left(L_2 + \hat{N}_1 + N_w\right)}{\gamma - 1} \text{ (phase iono-free)}$$

où $\hat{N}_1$ est une valeur estimée arrondie flottante de $N_1$, obtenue p. ex. par calcul de moyenne ou de médiane ou à l'aide d'un estimateur robuste avec rejet éventuel de valeurs aberrantes, sur le passage ou une partie du passage, des quantités $\hat{N}_1$ estimés par le code et la phase :

$$\hat{N}_1 \approx \left\langle \tilde{N}_1 \right\rangle = \left\langle \frac{P_1 - 2eP}{\lambda_1} - L_1 \right\rangle .$$

$\hat{N}_1$ est éloignée de la vraie valeur de $N_1$ d'une dizaine de cycles à cause du bruit de mesure sur le code.

On peut relier les quantités mesurées de code et de phase avec la distance géométrique modélisée D par les équations suivantes :

$$P_c = D + h_{rec} - h_{eme}$$
$$Q_c = D + \lambda_c \delta N_1 + h_{rec} - h_{eme} \quad,$$

avec $\lambda_c = (\gamma\lambda_1 - \lambda_2)/(\gamma\text{-}1)$, $h_{eme}$ et $h_{rec}$ correspondant aux horloges respectives des émetteurs et récepteurs (une valeur par date), et $\delta N_1$ étant la correction d'ambiguïté (une valeur par passage, $\delta N_1 = N_1 - \hat{N}_1$). La valeur de $\delta N_1$ sera identifiée par le filtrage global.

Les quantités D correspondent à une modélisation complète de la distance de propagation, qui fait intervenir les éléments suivants :

- combinaison des centres de phase bi-fréquence : il s'agit de la combinaison iono-free des centres de phase antenne (L1 et L2) récepteur et émetteur ;

- les orbites précises des satellites ;

- loi d'attitude des satellites (loi d'attitude nominale en lacet) ;

- effets relativistes dus à l'excentricité des satellites ;

- modélisation précise de la position du récepteur (avec modèle de marées terrestres) ;

- modélisation de l'allongement troposphérique (un allongement vertical par station avec la fonction de rabattement dépendant du site telle que définie dans le Stanag) ;

- modélisation du Wind-up (rotation géométrique de phase).

Les paramètres estimés par le filtre sont :

- à chaque pas de temps, les horloges $h_{eme}$ et $h_{rec}$ des satellites et des stations ;

- pour chaque passage, une ambiguïté de phase constante $\delta N_1$ (sans la contrainte qu'il s'agit d'un nombre entier)

- un allongement troposphérique vertical pour chaque station, avec une variation lente dans le temps (typiquement un segment constant toutes les 4 heures) ;

- des orbites précises des satellites (si des orbites précises ne sont pas fournies comme données d'entrée).

Le filtre peut être en formulation moindres carrés ou en formulation de Kalman, plus compatible d'un traitement temps-réel. Les valeurs d'entrée utilisées par le filtrage sont les valeurs non-différentiées de code iono-free et de phase iono-free, avec leurs bruits respectifs, qui sont de l'ordre de 1 m pour le code et 1 cm pour la phase.

A l'issue de cette étape, on obtient des estimées des résidus $\delta N_1$ identifiés calculés par $(Q_c\text{-}D\text{-}(h_{rec} - h_{eme}))/\lambda_c$. Des exemples de résidus $\delta N_1$ sont montrés à la fig. 1. (Les $\delta N_1$ ne sont pas entiers car aucune hypothèse sur les entiers n'a été faite lors du filtrage.)

Cette étape de filtrage sert avant tout à calculer proprement le terme D (modélisation géométrique). Les horloges identifiées à cette étape sont utilisées par la suite comme valeurs initiales ce qui permet par la suite de travailler sur des petites variations d'horloges, mais ce n'est pas indispensable.

Avec la valeur de D obtenue par le filtrage, on cherche maintenant, au niveau du réseau de référence les valeurs entières des $\delta N_1$. On utilise de nouveau l'équation

$$Q_c = D + \lambda_c \delta N_1 + h_{rec} - h_{eme}, \qquad\qquad (^\star)$$

où D prend maintenant la valeur trouvée par le filtrage. On remarque que l'équation possède une inobservabilité globale. En effet, on peut décaler les valeurs $\delta N_1$ concernant un émetteur donné et les valeurs $h_{eme}$ et/ou $h_{rec}$ correspondantes en conservant l'équation valide :

$$Q_c = D + \lambda_c (\delta N_1 + \alpha) + (h_{rec} - \lambda_c \alpha) - h_{eme}$$

A cette étape on calcule, de façon itérative les valeurs $h_{eme}$ en commençant avec une première station (un premier récepteur de référence) dont l'horloge est prise comme horloge de référence, et en rajoutant successivement des stations afin de compléter la totalité du réseau.

Pour la première station, on choisit $\delta N_1 = 0$ et $h_{rec} = 0$. Ce choix est arbitraire et résulte en un jeu de $h_{eme}$ pour les satellites visibles depuis la première station tel que l'équation ($^\star$) est vérifiée.

L'ajout d'une station est effectué comme suit. Avec le jeu de $h_{eme}$ connus avant l'ajout de la station on calcule les résidus $\delta N_1 + h_{rec}/\lambda_c$ qu'il faut exprimer sous la forme d'une valeur entière par passage (le $\delta N_1$), et un réel à chaque pas de temps (correspondant à l'horloge $h_{rec}$ de la station ajoutée). La fig. 2 montre les résidus $\delta N_1 + h_{rec}/\lambda_c$ pour une station nouvellement ajoutée. On remarque que les résidus sont espacés de valeurs entières et que leur décalage par rapport à la valeur entière la plus proche est identique. On peut donc poser que le décalage entre le résidu et la valeur entière la plus proche correspond à $h_{rec}/\lambda_c$ et la valeur entière elle-même à $\delta N_1$.

On note que pour une nouvelle station, les horloges des satellites, et donc les résidus $\delta N_1 + h_{rec}/\lambda_c$ ne sont connus, a priori, que une partie des passages. Mais comme $\delta N_1$ est constante par passage, on peut l'étendre à la totalité du passage. Les époques auxquelles un satellite donné est visible à partir d'une station ne correspondent qu'en partie aux époques auxquelles le même satellite est visible pour une station voisine. Plus les stations sont distantes, moins les durées de temps d'observation commune sont grandes. Ceci implique qu'on ajoute toujours une station voisine au moins à une des stations précédentes.

On identifie finalement un jeu de $\delta N_1$ entiers sur l'ensemble des passages de toutes les stations du réseau. On peut alors résoudre l'équation ($^\star$) sur l'ensemble des passages et pour toutes les stations du réseau avec les $h_{eme}$ et $h_{rec}$ comme seules inconnues.

Le procédé d'identification des $h_{eme}$ décrit dans cette partie fonctionne en temps différé, mais un homme du métier saurait implémenter un procédé équivalent fonctionnant en temps réel. P.ex. en identifiant une ambiguïté entière à chaque arrivée d'un nouveau passage, en collectant suffisamment de mesures de ce passage et en supposant que la solution courante d'horloges de satellites est elle-même entière, on verrait apparaître directement dans les résidus de mesure la valeur entière de l'ambiguïté.

Résolution des ambiguïtés de phase au niveau d'un récepteur (isolé)

Un récepteur quelconque, peut, s'il connaît les $\mu_{eme}$ des satellites visibles résoudre les ambiguïtés widelane. Le récepteur effectue des mesures non-différentiées de code et de phase, et trouve ainsi des valeurs brutes de l'ambiguïté widelane (illustrées à la fig. 1). Pour un passage (ou une partie de passage) il calcule une valeur brute moyenne de l'ambiguïté widelane et en déduit l'ambiguïté widelane $N_w$ entière par résolution de l'équation :

$$\left\langle \tilde{N}_w \right\rangle = N_w + \mu_{rec}^{w(t)} - \mu_{eme}^{w(t)},$$

où $\mu_{eme}$ est maintenant un paramètre connu. Le récepteur peut obtenir les valeurs des $\mu_{eme}$ d'une façon quelconque. Par exemple, il pourrait les télécharger d'une base de donnée externe (p.ex. d'un site internet). Ces valeurs étant très peu variables dans le temps, une fois obtenues, elles peuvent être utilisées pendant très longtemps à condition de les stocker à l'intérieur du récepteur. La fig. 2 montre les résidus $\left\langle \widetilde{N}_w \right\rangle + \mu_{eme}^{w(t)} = N_w + \mu_{rec}^{w(t)}$ obtenus après correction

des valeurs brutes de l'ambiguïté widelane de la fig. 1 avec les délais internes de satellite $\mu_{eme}$ respectifs connus. On voit que la valeur moyenne ou médiane pour chaque passage du résidu se trouve ramenée autour d'une même valeur (pas nécessairement entière) commune à tous les passages (0,7 dans le cas illustré). La partie fractionnaire de cette valeur commune donne donc $\mu_{rec}$, tandis que la partie entière donne l'ambiguïté widelane entière $N_w$.

La résolution de l'ambiguïté narrowlane au niveau du récepteur (isolé) est basée sur les équations

$$P_c = D + h_{rec} - h_{eme}$$
$$Q_c = D + \lambda_c \delta N_1 + h_{rec} - h_{eme} .$$

Pour déterminer $\delta N_1$, le récepteur a besoin de connaître les horloges de satellite ainsi que des orbites précises pour un certain temps d'observation (les orbites précises entrent dans la modélisation de D). De préférence, ces horloges de satellite et/ou les orbites précises sont diffusées par diffusion terrestre ou depuis un satellite SBAS (Satellite-Based Augmentation System).

Dans un premier temps, le récepteur détermine par filtrage la valeur de D, sur base d'une modélisation analogue à celle mentionnée plus haut. Lors de cette étape de calcul de D, il est en général nécessaire que le récepteur reste immobile. Dans un deuxième temps, le récepteur estime ses horloges de récepteur et les $\delta N_1$. Ensuite, il accède aux valeurs de $N_1$ par $N_1 = \delta N_1 + \hat{N}_1$ et aux valeurs de $N_2$ par $N_2 = N_w + N_1$.

## Revendications

1. Procédé de traitement de signaux de radionavigation provenant d'un satellite d'une constellation de satellites de radionavigation, ledit satellite diffusant au moins un premier signal de radionavigation sur une première fréquence et un second signal de radionavigation sur une seconde fréquence distincte de la première, dans lequel procédé l'on détermine, au niveau d'un réseau de référence comprenant au moins un récepteur de référence à partir duquel ledit satellite est visible, un délai interne dudit satellite et une valeur entière de l'ambiguïté widelane pour ledit récepteur de référence, cette détermination du délai interne de satellite et de la valeur entière de l'ambiguïté widelane comprenant les étapes de :

   recevoir lesdits premier et second signaux de radionavigation au niveau dudit récepteur de référence ;
   effectuer, à l'aide dudit récepteur de référence et pour chacun des premier et second signaux reçus, une mesure de code non différentiée et une mesure de phase non-différentiée ;
   calculer ladite valeur brute de l'ambiguïté de phase widelane à partir des mesures de code non-différentiées et des mesures de phase non-différentiées ;
   fixer le délai interne de satellite ainsi que la valeur entière de l'ambiguïté de phase widelane sur base de ladite valeur brute pour ledit récepteur de référence.

2. Procédé selon la revendication 1, le réseau de référence comprenant une pluralité de récepteurs de référence à partir desquels, à chaque fois une pluralité de satellites de ladite constellation sont visibles, chacun des ces satellites diffusant au moins un premier signal de radionavigation sur ladite première fréquence et un second signal de radionavigation sur ladite seconde fréquence, dans lequel procédé l'on détermine, pour chaque combinaison satellite/récepteur de référence disponible, de façon cohérente au niveau du réseau de référence, un délai interne de satellite et une valeur entières d'ambiguïté widelane sur base d'une valeur brute de l'ambiguïté widelane calculée à partir de mesures de code et de phase effectuées pour chacun des premier et second signaux provenant du satellite respectif à l'aide du récepteur de référence respectif.

3. Procédé selon la revendication 1 ou 2, comprenant l'étape de diffuser le délai interne de satellite déterminé.

4. Procédé de traitement de signaux de radionavigation provenant d'un satellite d'une constellation de satellites de radionavigation, ledit satellite diffusant au moins un premier signal de radionavigation sur une première fréquence et un second signal de radionavigation sur une seconde fréquence distincte de la première, lequel procédé comprend, au niveau d'un réseau de référence comprenant un ou plusieurs récepteurs de référence à partir desquels ledit satellite est visible, les étapes de :

recevoir lesdits premier et second signaux de radionavigation au niveau dudit ou desdits récepteurs de référence ;
effectuer, à l'aide dudit ou desdits récepteurs de référence et pour chacun des premier et second signaux reçus, une mesure de code non-différentiée et une mesure de phase non-différentiée ;
déterminer une valeur d'horloge de satellite dudit satellite à partir des mesures non-différentiées de code, des mesures non-différentiées de phase, d'une ou de plusieurs valeurs entières de l'ambiguïté widelane ainsi que d'une modélisation de la distance de propagation entre ledit satellite et ledit ou lesdits récepteurs de référence.

5. Procédé selon la revendication 4, dans lequel l'étape de détermination de la valeur d'horloge comprend les étapes de se procurer un délai interne de satellite concernant ledit satellite ; et déterminer une valeur entière de l'ambiguïté widelane sur base de ladite valeur brute et ledit délai interne de satellite.

6. Procédé selon la revendication 4 ou 5, dans lequel l'étape de détermination de la valeur d'horloge comprend l'estimation de paramètres de la modélisation de la distance de propagation à l'aide partir des mesures de code, des mesures de phase et d' une ou de plusieurs valeurs entières de l'ambiguïté widelane et ensuite l'estimation de la valeur d'horloge à partir des paramètres estimés.

7. Procédé selon la revendication 6, dans lequel l'estimation de paramètres de la modélisation de la distance de propagation inclut la détermination d'une orbite précise concernant ledit satellite.

8. Procédé selon l'une quelconque des revendications 4 à 7, comprenant l'étape de diffuser la valeur d'horloge de satellite déterminée.

9. Procédé selon la revendication 7, comprenant l'étape de diffuser une orbite précise déterminée.

10. Procédé de traitement de signaux de radionavigation provenant d'un satellite d'une constellation de satellites de radionavigation, ledit satellite diffusant au moins un premier signal de radionavigation sur une première fréquence et un second signal de radionavigation sur une seconde fréquence distincte de la première, lequel procédé comprend, au niveau d'un récepteur à partir duquel ledit satellite est visible, les étapes de :

recevoir lesdits premier et second signaux de radionavigation ;
effectuer, pour chacun des premier et second signaux reçus, une mesure de code non-différentiée et une mesure de phase non-différentiée ;
calculer une valeur brute de l'ambiguïté de phase widelane à partir des mesures non-différentiées de code et des mesures non-différentiées de phase ;
se procurer un délai interne de satellite concernant ledit satellite ; et
déterminer une valeur entière de l'ambiguïté widelane sur base de ladite valeur brute et ledit délai interne de satellite.

11. Procédé selon la revendication 10, dans lequel ledit délai interne de satellite est procuré à partir d'une base de données.

12. Procédé selon la revendication 10, dans lequel ledit délai interne est extrait d'un message diffusé par un satellite SBAS ou envoyé par un réseau de radiotéléphonie ou diffusé par diffusion terrestre.

13. Procédé selon l'une quelconque des revendications 10 à 12, comprenant les étapes de :

se procurer une valeur d'orbite et une valeur d'horloge de satellite concernant ledit satellite ;
estimer par filtrage, à partir des mesures non-différentiées de code,
des mesures non-différentiées de phase de ladite valeur entière de l'ambiguïté widelane, de ladite valeur d'orbite, de ladite valeur d'horloge de satellite ainsi que d'une modélisation de la distance de propagation entre ledit satellite et ledit récepteur, une valeur entière d'une ambiguïté narrowlane.

14. Procédé selon la revendication 13, dans lequel ladite valeur d'orbite et ladite valeur d'horloge sont procurées à partir d'une base de données.

**15.** Procédé selon la revendication 13, dans lequel ladite valeur d'orbite et ladite valeur d'horloge sont extraites d'un message diffusé par un satellite SBAS ou envoyé par un réseau de radiotéléphonie ou diffusé par diffusion terrestre.

**Claims**

**1.** Method for processing radionavigation signals that originate from a satellite of a constellation of radionavigation satellites, said satellite broadcasting at least a first radionavigation signal on a first frequency and a second radionavigation signal on a second frequency that is different from the first, in which method one determines, at the level of a reference network comprising at least one reference receiver, from which said satellite is visible, an internal satellite delay and an integer value of the wide-lane ambiguity for said reference receiver, this determination of the internal satellite delay and of the integer value of the wide-lane ambiguity comprising the steps:

receiving said first and second radionavigation signals at the level of said reference receiver;
by means of said reference receiver and for each of the first and second received signals, executing a non-differentiated code measurement and a non-differentiated phase measurement;
computing a raw value of the wide-lane phase ambiguity from the non-differentiated code measurements and from the non-differentiated phase measurements;
fixing the internal satellite delay together with the integer value of the wide-lane phase ambiguity based on said raw value for said reference receiver

**2.** Method according to claim 1, the reference network comprising a plurality of reference receivers, from which, each time a plurality of satellites of said constellation are visible, each of these satellites broadcasting at least a first radionavigation signal on said first frequency and a second radionavigation signal on said second frequency, in which method one determines, for each available combination satellite/reference receiver, in a coherent manner at the level of the reference network, an internal satellite delay and an integer value of the wide-lane ambiguity on the basis of a raw value of the wide-lane ambiguity computed from the code and phase measurements made for each of the first and second signals originating from the respective satellite with the help of the respective reference receiver

**3.** Method according to claim 1 or 2 comprising the step of broadcasting the determined internal satellite delay

**4.** Method for processing radionavigation signals that originate from a satellite of a constellation of radionavigation satellites, said satellite broadcasting at least a first radionavigation signal on a first frequency and a second radionavigation signal on a second frequency that is different from the first, said method comprising, at the level of a reference network comprising one or a plurality of reference receivers, from which said satellite is visible, the steps:

receiving said first and second radionavigation signals at the level of said reference receiver or receivers;
by means of said reference receiver or receivers and for each of the first and second received signals, executing a non-differentiated code measurement and a non-differentiated phase measurement;
determining a satellite clock value of said satellite from the non-differentiated code measurements, the non-differentiated phase measurements, one or a plurality of integer values of the wide-lane ambiguity as well as a model of the propagation distance between said satellite and said reference receiver or receivers

**5.** Method according to claim 4 wherein the step for the determination of the clock value comprises the steps:

obtaining an internal satellite delay concerning said satellite; and
determining an integer value of the wide-lane ambiguity based on said raw value and said internal satellite delay

**6.** Method according to claim 4 or 5 wherein the step for the determination of the clock value comprises the estimation of the model parameters for the propagation distance with the help of the code measurements, the phase measurements and one or a plurality of integer values of the wide-lane ambiguity and subsequently the estimation of the clock value from the estimated parameters

**7.** Method according to claim 6 wherein the estimation of the model parameters for the propagation distance includes the determination of a precise orbit concerning said satellite

**8.** Method according to any one of claims 4 to 7 comprising the step of broadcasting the determined satellite clock value

9. Method according to claim 7 comprising the step of broadcasting a determined precise orbit.

10. Method for processing radionavigation signals that originate from a satellite of a constellation of radionavigation satellites, said satellite broadcasting at least a first radionavigation signal on a first frequency and a second radionavigation signal on a second frequency that is different from the first, said method comprising, at the level of a receiver, from which said satellite is visible, the steps:

   receiving said first and second radionavigation signals;
   for each of the first and second received signals, executing a non-differentiated code measurement and a non-differentiated phase measurement;
   computing a raw value of the wide-lane phase ambiguity from the non-differentiated code measurements and the non-differentiated phase measurements;
   obtaining an internal satellite delay concerning said satellite; and
   determining an integer value of the wide-lane ambiguity based on said raw value and said internal satellite delay

11. Method according to claim 10 wherein said internal satellite delay is obtained from a database

12. Method according to claim 10 wherein said internal delay is extracted from a message broadcast by an SBAS satellite or sent by a radiotelephonic network or broadcast by terrestrial broadcast

13. Method according to any one of claims 10 to 12 comprising the steps:

   obtaining an orbit value and a satellite clock value concerning said satellite;
   estimating an integer value of a narrow-lane ambiguity by filtering from the non-differentiated code measurements, the non-differentiated phase measurements of said integer value of the wide-lane ambiguity, said orbit value, said satellite clock value as well as a model of the propagation distance between said satellite and said receiver

14. Method according to claim 13 wherein said orbit value and said clock value are obtained from a database

15. Method according to claim 13 wherein said orbit value and said clock value are extracted from a message broadcast by an SBAS satellite or sent by a radiotelephonic network or broadcast by terrestrial broadcast

**Patentansprüche**

1. Verfahren zum Verarbeiten von Funknavigationssignalen, die von einem Satelliten einer Funknavigationssatellitenkonstellation kommen, wobei der Satellit mindestens ein erstes Funknavigationssignal auf einer ersten Frequenz und ein zweites Funknavigationssignal auf einer zweiten, von der ersten verschiedenen Frequenz überträgt, bei welchem Verfahren an einem Referenznetz, das mindestens einen Referenzempfänger umfasst, von dem aus der Satellit sichtbar ist, eine interne Verzögerung des Satelliten und ein ganzzahliger Wert der Widelane-Ambiguität für den Referenzempfänger bestimmt werden, wobei diese Bestimmung der internen Satellitenverzögerung und des ganzzahligen Wertes der Widelane-Ambiguität folgende Schritte umfasst:

   Empfang des ersten und zweiten Funknavigationssignals am Referenzempfänger;
   Durchführung einer nicht differenzierten Codemessung und einer nicht differenzierten Phasenmessung mit Hilfe des Referenzempfängers und für jedes der ersten und zweiten empfangenen Signale;
   Berechnung des Bruttowertes der Widelane-Phasenambiguität aus den nicht differenzierten Codemessungen und den nicht differenzierten Phasenmessungen;
   Bestimmung der internen Satellitenverzögerung sowie des ganzzahligen Wertes der Widelane-Phasenambiguität auf Basis des Bruttowertes für den Referenzempfänger.

2. Verfahren nach Anspruch 1, wobei das Referenznetz eine Vielzahl von Referenzempfängern umfasst, von denen aus jeweils eine Vielzahl von Satelliten der Satellitenkonstellation sichtbar ist, wobei jeder dieser Satelliten mindestens ein erstes Funknavigationssignal auf der ersten Frequenz und ein zweites Funknavigationssignal auf der zweiten Frequenz überträgt, bei welchem Verfahren für jede verfügbare Satellit/Referenzempfänger-Kombination in kohärenter Weise an dem Referenznetz eine interne Satellitenverzögerung und ein ganzzahliger Widelane-Ambiguitätswert auf Basis eines Bruttowertes der Widelane-Ambiguität bestimmt werden, welcher aus Code- und Phasenmessungen, die für jedes der von dem jeweiligen Satelliten kommenden ersten und zweiten Signale durchgeführt werden, mit Hilfe des jeweiligen Referenzempfängers berechnet wird

3. Verfahren nach Anspruch 1 oder 2, umfassend den Schritt der Übertragung der bestimmten internen Satellitenverzögerung.

4. Verfahren zum Verarbeiten von Funknavigationssignalen, die von einem Satelliten einer Funknavigationssatellitenkonstellation kommen, wobei der Satellit mindestens ein erstes Funknavigationssignal auf einer ersten Frequenz und ein zweites Funknavigationssignal auf einer zweiten, von der ersten verschiedenen Frequenz überträgt, welches Verfahren an einem Referenznetz, das einen oder mehrere Referenzempfänger umfasst, von denen aus der Satellit sichtbar ist, folgende Schritte umfasst:

Empfang des ersten und zweiten Funknavigationssignals an dem oder den Referenzempfängern;
Durchführung einer nicht differenzierten Codemessung und einer nicht differenzierten Phasenmessung mit Hilfe des oder der Referenzempfänger und für jedes der ersten und zweiten empfangenen Signale;
Bestimmung eines Taktwertes des Satelliten aus den nicht differenzierten Codemessungen, den nicht differenzierten Phasenmessungen, einem oder mehreren ganzzahligen Werten der Widelane-Ambiguität sowie einer Modellierung der Ausbreitungsdistanz zwischen dem Satelliten und dem oder den Referenzempfängern.

5. Verfahren nach Anspruch 4, bei dem der Schritt der Bestimmung des Taktwertes folgende Schritte umfasst:

Beschaffung einer internen Satellitenverzögerung für den Satelliten;
und
Bestimmung eines ganzzahligen Wertes der Widelane-Ambiguität auf Basis des Bruttowertes und der internen Satellitenverzögerung.

6. Verfahren nach Anspruch 4 oder 5, bei dem der Schritt der Bestimmung des Taktwertes die Schätzung von Parametern der Modellierung der Ausbreitungsdistanz aus den Codemessungen, den Phasenmessungen und einem oder mehreren ganzzahligen Werten der Wideline-Ambiguität und sodann die Schätzung des Taktwertes aus den geschätzten Parametern umfasst

7. Verfahren nach Anspruch 6, bei dem die Schätzung von Parametern der Modellierung der Ausbreitungsdistanz die Bestimmung einer präzisen Umlaufbahn für den Satelliten einschließt

8. Verfahren nach irgendeinem der Ansprüche 4 bis 7, umfassend den Schritt der Übertragung des bestimmten Satellitentaktwertes

9. Verfahren nach Anspruch 7, umfassend den Schritt der Übertragung der bestimmten präzisen Umlaufbahn

10. Verfahren zum Verarbeiten von Funknavigationssignalen, die von einem Satelliten einer Funknavigationssatellitenkonstellation kommen, wobei der Satellit mindestens ein erstes Funknavigationssignal auf einer ersten Frequenz und ein zweites Funknavigationssignal auf einer zweiten, von der ersten verschiedenen Frequenz überträgt, welches Verfahren an einem Empfänger, von dem aus der Satellit sichtbar ist, folgende Schritte umfasst:

Empfang des ersten und zweiten Funknavigationssignals;
Durchführung einer nicht differenzierten Codemessung und einer nicht differenzierten Phasenmessung für jedes der ersten und zweiten empfangenen Signale;
Berechnung eines Bruttowertes der Widelane-Phasenambiguität aus den nicht differenzierten Codemessungen und den nicht differenzierten Phasenmessungen;
Beschaffung einer internen Satellitenverzögerung für den Satelliten; und
Bestimmung eines ganzzahligen Wertes der Widelane-Ambiguität auf Basis des Bruttowertes und der internen Satellitenverzögerung.

11. Verfahren nach Anspruch 10, bei dem die interne Satellitenverzögerung aus einer Datenbank geliefert wird.

12. Verfahren nach Anspruch 10, bei dem die interne Satellitenverzögerung aus einer Nachricht ausgelesen wird, die von einem SBAS-Satelliten übertragen oder von einem Sprechfunknetz ausgesendet oder durch terrestrische Übertragung übertragen wird

13. Verfahren nach irgendeinem der Ansprüche 10 bis 12, umfassend folgende Schritte:

Beschaffung eines Bahnwertes und eines Taktwertes für den Satelliten;
Schätzung mittels Filterung eines ganzzahligen Wertes einer Narrowlane-Ambiguität aus den nicht differenzierten Codemessungen, den nicht differenzierten Phasenmessungen, dem ganzzahligen Wert der Widelane-Ambiguität, dem Bahnwert, dem Taktwert sowie einer Modellierung der Ausbreitungsdistanz zwischen dem Satelliten und dem Empfänger

14. Verfahren nach Anspruch 13, bei dem der Bahnwert und der Taktwert aus einer Datenbank geliefert werden.

15. Verfahren nach Anspruch 13, bei dem der Bahnwert und der Taktwert aus einer Nachricht ausgelesen werden, die von einem SBAS-Satelliten übertragen oder von einem Sprechfunknetz ausgesendet oder durch terrestrische Übertragung übertragen wird

**Fig. 1**

**Fig. 2**

**Fig. 3**

cycle N1                                          alrt

**Fig. 4**

cycle N1                              Différences alrt—thu3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. J. Gabor ; R. S. Nerem.** GPS carrier phase ambiguity resolution using satellite-satellite single differences. *ION GPS '99,* 14 Septembre 1999